# EUROPÄISCHE PATENTANMELDUNG

(11) **EP 2 194 397 A1**
(43) Veröffentlichungstag der Anmeldung: **09.06.2010**
(21) Anmeldenummer: 09013819.9
(22) Anmeldetag: 03.11.2009
(51) Int. Cl.: G01S 7/481, G01S 17/46, G01S 17/48

(54) **Verfahren und optischer Sensor zur Erfassung von Objekten**

(30) Priorität: 08.12.2008 DE 102008061035
(71) Anmelder: SICK AG, 79183 Waldkirch/Breisgau (DE)
(72) Erfinder: Hörsch, Ingolf, 79102 Freiburg (DE); Lang, Felix, Dr., 79418 Schliengen (DE); Fortenbacher, Philipp, 79194 Gundelfingen (DE); Merettig, Gerhard, 79350 Sexau (DE)
(74) Vertreter: Manitz, Finsterwald & Partner GbR

(57) **Zusammenfassung**

Die Erfindung betrifft ein Verfahren zur Erfassung von Objekten (12) in einem Erfassungsbereich (20), bei dem wenigstens ein Sendelichtbündel (18) in den Erfassungsbereich (20) gesendet wird, gegebenenfalls von einem Objekt (12) zurückreflektiertes oder zurückremittiertes Sendelicht (18) mit einer Empfängereinheit (26) mit in Form einer MxN-Matrix angeordneten Empfangselementen (28) detektiert wird, wobei M > 1 und N > 1, und aus der Position des von dem reflektierten oder remittierten Licht an der Empfängereinheit (26) erzeugten wenigstens einen Lichtflecks (30) durch Triangulation die Entfernung (14) des Objektes (12) bestimmt wird. Zusätzlich zur Position des reflektierten oder remittierten Lichtes wird die zweidimensionale Energieverteilung des wenigstens einen empfangenen Lichtflecks (30) innerhalb des auf der Empfängereinheit (26) auftreffenden Lichtes ausgewertet, um zusätzlich zu der durch Triangulation ermittelten Entfernung des Objektes (12) weitere Information über das Objekt (12) zu bestimmen, wobei ein Lichtfleckqualitätswert bestimmt wird, der Information über die Homogenität des an dem Objekt (12) reflektierten bzw. remittierten Lichtes enthält. Die Erfindung betrifft weiterhin einen optischen Sensor (10) zur Durchführung eines erfindungsgemäßen Verfahrens.

## Beschreibung

Die Erfindung betrifft ein Verfahren zur Erfassung von Objekten in einem Erfassungsbereich, bei dem wenigstens ein Sendelichtbündel in den Erfassungsbereich gesendet wird und gegebenenfalls von einem Objekt zurück reflektiertes oder zurück remittiertes Sendelicht mit einer Empfängereinheit detektiert wird, wobei aus der Position des von dem reflektierten oder remittierten Lichtes an der Empfängereinheit erzeugten wenigstens einen Lichtflecks durch Triangulation die Entfernung des Objektes bestimmt wird. Weiterhin betrifft die Erfindung einen optischen Sensor zur Durchführung des erfindungsgemäßen Verfahrens.

Es ist bekannt, die Entfernung von Gegenständen in einem Erfassungsbereich zum Beispiel in optischen Tastern nach dem sogenannten Triangulationsprinzip zu bestimmen. Dazu besteht der Sensor aus einer Sendeeinheit, zum Beispiel einer Leuchtdiode oder einer Lasereinheit mit einer entsprechenden Sendeoptik, der einen Lichtstrahl in den Erfassungsbereich zu einem dort gegebenenfalls befindlichen zu detektierenden Objekt sendet. Das von einem solchen Objekt reflektierte oder remittierte Licht wird von einem Empfänger detektiert, der aus einer Empfängereinheit und einer Empfängeroptik besteht, die das reflektierte bzw. remittierte Licht auf die Empfängereinheit richtet. Die Empfängereinheit besteht bei bekanten Lösungen aus einer Zeile von fotosensitiven Elementen. Sowohl der Sender als auch der Empfänger umfassen in der Regel eine entsprechende Sende- bzw. Empfangsoptik, die nebeneinander angeordnet sind ("sogenanntes Doppelaugesystem"). In Abhängigkeit der Entfernung zwischen Sensor und reflektierendem Objekt ändert sich die Position des detektierten Lichts auf dem Detektor. Zwischen dem Auftreffpunkt auf dem Detektor und der Entfernung des erfassten Objekts besteht ein eindeutiger geometrischer Zusammenhang. Auswertung der Lichtverteilung auf dem Empfängerarray, in der Regel durch Auswertung der Lage des Lichtfleckschwerpunktes, kann daher zur Entfernungsbestimmung verwendet werden. Ein solcher Triangulationstaster ist zum Beispiel in DE 197 21 105 A1 beschrieben.

DE 102 38 075 B4 beschreibt einen Triangulationssensor mit zwei parallelen Messkanälen, die dadurch gebildet werden, dass zwei Laser parallel Licht in den Erfassungsbereich aussenden, das von zwei entsprechend angeordneten Zeilen aus lichtempfindlichen Elementen detektiert wird.

Das oben beschriebene bekannte Triangulationsverfahren kann unter bestimmten Bedingungen fehlerträchtig sein bzw. eine ungenaue Tastweitenschätzung mit sich bringen, insbesondere, wenn das Objekt glänzend, also nicht von "lambertscher" Remissionscharakteristik, ist oder das Sendelichtbündel im Erfassungsbereich mehrere Objekte in unterschiedlichen Abständen gleichzeitig erfasst. Außerdem kann es problematisch sein, wenn das Sendelichtbündel auf dem Weg zu oder von dem zu detektierenden Objekt von metallischen glänzenden Flächen abgelenkt wird oder im Hintergrund spiegelnde Flächen vorhanden sind. Auch sich im Erfassungsbereich bewegende Objekte können problematisch sein, insbesondere wenn sich das Objekt aus der Tiefe in Richtung der Sender-/Empfängeranordnung bewegt. Schließlich kann es problematisch sein, wenn ein Objekt an unterschiedlichen Oberflächenbereichen unterschiedliche Remissions- bzw. Reflexionseigenschaften aufweist. Dies führt nämlich dazu, dass der energetische Schwerpunkt des reflektierten Lichtes von dem geometrischen Schwerpunkt abweicht, sodass die Schwerpunktsauswertung an der Zeile aus lichtempfindlichen Elementen ungenau wird.

Für Lichtschranken ist es bekannt, Licht durch einen Überwachungsbereich auf einen feststehenden zweidimensionalen Reflektor bzw. Retroreflektor zu senden. Das reflektierte Licht wird durch den Überwachungsbereich wieder zurück zu einem Empfänger reflektiert. Ein Objekt, das sich im Überwachungsbereich befindet, blockt den Lichtweg ab, sodass ein entsprechendes Signal erzeugt werden kann. Aus DE 10 2005 060 399 A1 ist es für Lichtschranken bekannt, zweidimensionale Empfängerarrays einzusetzen, um Abweichungen von einer Lichtfleckgeometrie detektieren zu können, die erwartet wird, wenn sich im Überwachungsbereich kein Objekt befindet.

Andere Systeme arbeiten nach dem Kameraprinzip, bei dem ein Bild einer Szene aufgenommen und vollständig einer Auswerteeinheit zugeführt wird. Mit Hilfe von entsprechenden Bildverarbeitungsalgorithmen werden dann bestimmte Merkmale, zum Beispiel Objektform, -lage oder -bewegung analysiert und bewertet, um Information über das im Erfassungsbereich befindliche Objekt zu erhalten.

DE 10 2005 062 258 A1 beschreibt einen Triangulationssensor, bei dem eine Distanzbestimmung nach dem Triangulationsprinzip vorgenommen wird. Dazu wird ein Mehrfachempfangselement eingesetzt, bei dessen Betrieb die Breite der Signalverläufe der Empfangslichtflecke auf dem Mehrfachempfangselement ermittelt wird. Damit können unterschiedlich glänzende Objekte sicher detektiert werden und gegebenenfalls eine Bedruckung oder Strukturierung der Objektoberfläche beurteilt werden.

DE 10 2004 053 219 B3 beschreibt einen optischen Sensor, bei dem die Energieverteilung eines Lichtflecks an einer Empfängereinheit durch spalten- oder zeilenweise Summation der Ausgangssignale ausgewertet wird.

Ein Verfahren zur Erfassung von Objekten in einem Erfassungsbereich mit den Merkmalen des Oberbegriffes des Anspruches 1 ist aus DE 10 2007 003 024 A1 bekannt.

Aufgabe der vorliegenden Erfindung ist es, ein Verfahren zur Erfassung von Objekten und einen optischen Sensor anzugeben, die eine Messung der Entfernung und eine Auswertung zusätzlicher Informationen zur Erhöhung der Genauigkeit und zur Vermittlung zusätzlich Objektinformation bieten.

Diese Aufgabe wird mit einem Verfahren zur Erfassung von Objekten mit den Merkmalen des Anspruches 1 und einem optischen Sensor mit den Merkmalen des Anspruches 11 gelöst. Unteransprüche sind jeweils auf bevorzugte Ausgestaltungen bzw. Ausführungsformen gerichtet.

Erfindungsgemäß ist insbesondere vorgesehen, dass als Empfängereinheit eine MxN-Matrix von Empfangselementen verwendet, wobei M und N größer sind als Eins. Zusätzlich zur Position des reflektierten oder remittierten Lichtes, aus der zum Beispiel durch Auswertung des Schwerpunktes die Entfernung des Objektes mit Hilfe von Triangulation bestimmt werden kann, wird erfindungsgemäß die zweidimensionale Energieverteilung des wenigstens einen empfangenen Lichtflecks innerhalb des auf der Empfängereinheit auftreffenden Lichtes ausgewertet, um zusätzlich zu der durch die Triangulation ermittelten Entfernung des Objektes weitere Information über das Objekt bestimmen zu können. Die Verwendung einer zweidimensionalen Matrix aus Empfangselementen ermöglicht es dabei, dass die Licht- bzw. Energieverteilung in zwei Dimensionen gemessen und ausgewertet wird. Auf diese Weise ist zusätzlich zu der durch Triangulation ermittelten Entfernung des Objektes weitere Information verfügbar, die zur Erhöhung der Genauigkeit der Entfernungsmessung und/oder zum Beispiel zur Bestimmung von Bewegungsparametern oder der Oberflächenbeschaffenheit des im Erfassungsbereich befindlichen Objektes verwendet werden kann. Ein aus der Energieverteilung des Lichtflecks abgeleiteter Messwert oder eine entsprechend abgeleitete Messkurve können dann zum Beispiel einer Auswerteeinheit zur weiteren Verarbeitung zur Verfügung gestellt werden. Aufwändige Bildverarbeitungsalgorithmen sind nicht notwendig.

Eine besondere Ausgestaltung des erfindungsgemäßen Verfahrens wertet die Bewegung des Lichtfleckes an der Empfängereinheit aus, um auf den Bewegungszustand des Objektes im Erfassungsbereich, insbesondere dessen Bewegungsrichtung, zu schließen. Durch die zweidimensionale Matrixanordnung von Empfangselementen ist es dabei möglich, die Bewegung des Objektes nicht nur dann zu bestimmen, wenn sich dessen Entfernung von der Sende/Empfängereinheit verändert, sondern auch in lateraler Richtung.

Bei einer Ausgestaltung des erfindungsgemäßen Verfahrens wird die Kontur des Lichtfleckes ausgewertet, um auf die Lage des Objektes bezüglich des Sendelichtbündels zu schließen. Insbesondere kann durch Auswertung der Kontur festgestellt werden, ob das Sendelichtbündel das Objekt vollständig trifft.

Andererseits kann aus der Kontur des wenigstens einen Lichtfleckes auch auf die Anzahl der Objekte im Überwachungsbereich geschlossen werden.

Eine andere vorteilhafte Ausgestaltung des erfindungsgemäßen Verfahrens wertet die Lichtfleckgröße an der Empfängereinheit aus um daraus auf die Entfernung des detektierten Objekts zu schließen. Auf diese Weise ist es möglich, zusätzlich zu dem durch Triangulation bestimmten Entfernungsmesswert eine weitere Abschätzung der Entfernung zu bekommen, sodass die Genauigkeit des Messverfahrens deutlich erhöht wird. Dazu kann insbesondere die bestimmte Lichtfleckgröße mit einer Lichtfleckgröße verglichen werden, wie sie bei einem Objekt in bekanntem Abstand gemessen wurde, und der Abstand durch Anwendung der physikalischen Abbildungsgesetze auf die Empfängeroptik abgeschätzt werden.

Die Energieverteilung oder die Kontur des an der Empfängereinheit empfangenen Lichtflecks wird bei einer anderen bevorzugten Ausführungsform des erfindungsgemäßen Verfahrens genutzt, um Information über die Oberflächenbeschaffenheit eines Objektes im Erfassungsbereich zu erhalten. So spiegeln sich Inhomogenitäten der Oberfläche des Objektes in der zweidimensionalen Energieverteilung des reflektierten bzw. remittierten Lichtfleckes in noch zu beschreibender Weise wieder.

Ist andererseits zum Beispiel aus der Triangulationsauswertung die Entfernung des Objektes bekannt, kann aus der Größe des Lichtfleckes darauf zurückgeschlossen werden, ob es sich bei dem Objekt um ein spiegelndes oder mattes (Lambert-)Target handelt. Andererseits kann bei bekannter Reflexionseigenschaft des gegebenenfalls zu detektierenden Objektes die Lichtfleckgröße wie beschrieben zur zusätzlichen Absicherung der Abstandsbestimmung eingesetzt werden.

Um Informationen über die Homogenität der Objektoberfläche zu erhalten, wird die Homogenität des am Objekt reflektierten bzw. remittierten Lichtes ausgewertet, wozu erfindungsgemäß ein Lichtfleckqualitätswert bestimmt werden kann. Dabei kann es sich zum Beispiel um die Standardabweichung der räumlichen Energieverteilung oder den mittleren Kontrast handeln. Ein solcher Wert gibt ohne große Auswertungsalgorithmen einen Wert über die Oberflächenbeschaffenheit an, der zum Beispiel verwendet werden kann, um einzelne Objekte unterscheiden zu können, die zum Beispiel unterschiedliche Anteile an spiegelnden Bereichen aufweisen.

Grundsätzlich ist es möglich, jedes einzelne Empfangselement der matrixförmigen Empfängereinheit individuell auszuwerten. Besonders wirtschaftlich, schnell und kostengünstig ist es jedoch, wenn die Energieverteilung des Lichtflecks an der Empfängereinheit nur für Untermengen bestimmt wird, die mehr als ein Empfangselement aufweisen. Eine solche Verfahrensführung bietet sich insbesondere an, wenn gegebenenfalls zu detektierende Objekte, deren Entfernung bestimmt werden soll, in ihren Reflexions- bzw. Remissionseigenschaften und/oder ihrer Größe zumindest weitgehend bekannt sind, sodass nicht die gesamte Empfängereinheit, sondern nur eine Untermenge von Interesse ist, in der sich das zu detektierende Objekt in der Regel befinden wird.

Eine alternative Ausgestaltung sieht vor, dass die Energieverteilung des Lichtflecks an der Empfängereinheit durch spalten- oder zeilenweise Summation der Ausgangssignale der Empfangselemente der Empfängereinheit ausgewertet wird. Auf diese Weise entsteht nur eine sehr geringe Anzahl von einzelnen Werten, die der Anzahl der Zeilen bzw. Spalten entspricht und - zumindest bei ausgewählten Anwendungen - dennoch ausreichend Information zur Identifizierung zu detektierender Objekte bietet.

Das erfindungsgemäße Verfahren kann auch strukturiertes Sendelicht einsetzen, das zum Beispiel an mehreren unterschiedlichen Stellen eines zu detektierenden Objektes reflektiert bzw. remittiert wird oder unterschiedliche Bereiche des Erfassungsbereiches beleuchtet. Eine solche Ausgestaltung liefert zusätzliche räumliche Information über die Lage des bzw. der Objekte im Erfassungsbereich bzw. über die Lage unterschiedlicher Oberflächenbereiche an einem oder mehreren Objekt.

Ein erfindungsgemäßer optischer Sensor weist wenigstens einen Lichtsender zum Aussenden wenigstens eines Sendelichtbündels und wenigstens eine Empfängereinheit auf, die derart angeordnet ist, dass die von einem im Erfassungsbereich angeordneten Objekt zurückreflektierten oder -remittierten Sendelichtbündel auf die Empfängereinheit treffen. Eine Auswerteeinheit ist derart ausgestaltet, dass sie nach dem Triangulationsprinzip aus der Position, vorzugsweise aus der Schwerpunktsposition, des auf der Empfängereinheit auftreffenden von einem Objekt im Erfassungsbereich zurückreflektierten oder zurückremittierten Sendelichtes auf die Distanz des Objektes zurückschließen kann. Erfindungsgemäß weist die Empfängereinheit mehrere in Form einer MxN-Matrix angeordneten Empfangselemente auf, wobei M und N jeweils größer sind als Eins. Der wenigstens eine Sender ist erfindungsgemäß derart ausgestaltet, dass er wenigstens ein lateral ausgedehntes Lichtbündel erzeugt, das nach Reflexion an einem Objekt im Erfassungsbereich wenigstens einen Lichtfleck bildet, der in den beiden lateralen Dimensionen mehrere Empfangselemente trifft. Die lateralen Dimensionen bezeichnen dabei die Raumrichtungen, die im Wesentlichen senkrecht zum Sendelichtbündel sind.

Der erfindungsgemäße optische Sensor weist eine Auswerteeinheit auf, die derart ausgestaltet ist, dass sie zusätzlich zur Position des wenigstens einen reflektierten oder remittierten Lichtflecks die zweidimensionale Energieverteilung des wenigstens einen Lichtflecks auswerten kann, um zusätzlich zu der durch Triangulation ermittelten Entfernung des Objekts weitere Information über das Objekt bestimmen zu können.

Als Lichtsender sind Lichtquellen möglich, die einen ausgedehnten Lichtfleck erzeugen. Besonders wirtschaftlich und einfach ist die Verwendung einer Leuchtdiode.

Für die Empfängereinheit, die eine matrixförmige Anordnung von Empfangselementen aufweist, eignet sich besonders ein CCD-Array bzw. ein CMOS-Array.

Die Erfindung wird anhand der beiliegenden Figuren im Detail erläutert, die in nur schematischer und nicht notwendigerweise maßstabsgetreuer Darstellung erfindungsgemäße Anordnungen bzw. Verfahrensführungen darstellen. Dabei zeigen
- Fig. 1: den schematischen Aufbau eines erfindungsgemäßen Triangulationssensors,
- Fig. 2: ein Beispiel eines auf einer Empfängereinheit nach Reflexion an einem Objekt im Erfassungsbereich erzeugten Lichtfleckes,
- Fig. 3: zum Vergleich den Lichtfleck auf der Empfängereinheit einer herkömmlichen Triangulationsanordnung nach Reflexion an einem Objekt im Erfassungsbereich,
- Fig. 4a: den Lichtfleck auf einer Empfängereinheit mit Darstellungen der spalten- bzw. zeilenweisen Summation der Energie- bzw. Intensitätswerte,
- Fig. 4b: eine schematische Darstellung einer Anordnung, die zu dem Lichtfleck der Fig. 4a führt,
- Fig. 5: ein Beispiel eines Lichtfleckes an der Empfängereinheit nach Reflexion des Sendelichtes an einem inhomogenen Objekt im Erfassungsbereich,
- Fig. 6: ein Beispiel eines Lichtfleckes an der Empfängereinheit nach Reflexion des Sendelichtes an einem spiegelnden Objekt im Erfassungsbereich,
- Fig. 7a: ein Beispiel eines Lichtfleckes an der Empfängereinheit nach Reflexion des Sendelichtes an einem Objekt, das nur teilweise in das Sendelichtbündel eingetreten ist,
- Fig. 7b: eine Anordnung, die zu einem Lichtfleck entsprechend der Fig. 7a führt,
- Fig. 8a und 8b: Beispiele von Lichtflecken an der Empfängereinheit, die durch Reflexion oder Remission des Sendelichtes eines sich in X-Richtung bewegenden Objektes zu unterschiedlichen Zeitpunkten erzeugt werden,
- Fig. 9a: ein Beispiel einer Lichtfleckgeometrie an der Empfängereinheit nach Reflexion des Sendelichtes an mehreren Objekten im Erfassungsbereich,
- Fig. 9b: eine Darstellung einer Anordnung, die zu einer Lichtfleckgeometrie gemäß Fig. 9a führt,
- Fig. 10a bis 10c: den zeitlichen Verlauf der Lichtfleckgeometrie, der von einem sich bewegenden Objekt an der Empfängerein- heit erzeugt wird, wenn Licht auch ohne Objekt im Erfassungsbereich zu der Empfängereinheit reflektiert wird,
- Fig. 11: die Geometrie der Energieverteilung an der Empfängereinheit, wenn sich im Erfassungsbereich zusätzliche Störobjekte befinden,
- Fig. 12: eine Darstellung um verschiedene Auswertekriterien zu erläutern,
- Fig. 13: eine erläuternde Skizze zu einer Verfahrensführung, bei der ein strukturiertes Sendelichtbündel zum Einsatz kommt.

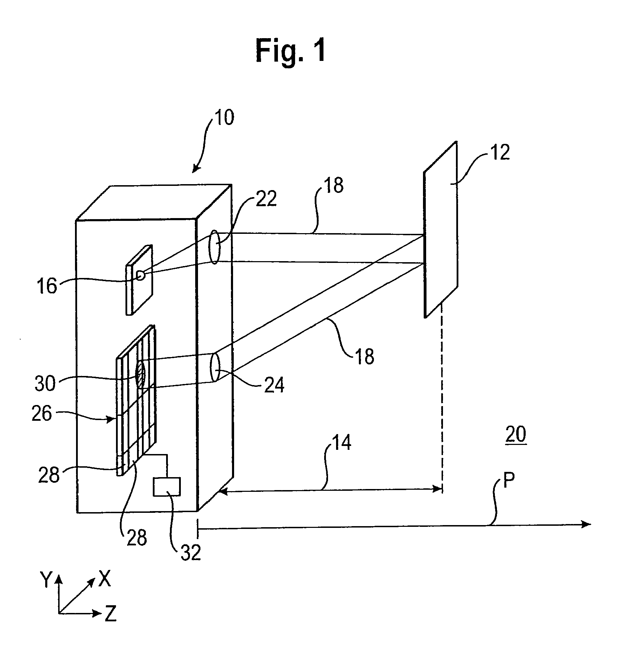

Fig. 1 zeigt in schematischer Darstellung einen Triangulationstaster 10, der zur Durchführung eines erfindungsgemäßen Verfahrens geeignet ist, also insbesondere um den Abstand von Objekten in einem Erfassungsbereich 20 von dem Triangulationstaster 10 zu bestimmen. Der Erfassungsbereich 20 erstreckt sich in der Darstellung in der Fig. 1 nach rechts von dem Triangulationstaster weg in Richtung des angedeuteten Pfeils P. Der Abstand eines Objektes 12 ist mit Bezugsziffer 14 bezeichnet. Von einem Sendeelement 16 wird ein Lichtbündel 18 durch die Sendeoptik, die zum Beispiel eine Sammellinse 22 umfassen kann, in Richtung des Objektes 12 geschickt. Das hier nur schematisch dargestellte Sendeelement 16 kann zum Beispiel eine Leuchtdiode sein, die hier auf einer Platine angeordnet ist. Von dem gegebenenfalls im Erfassungsbereich befindlichen Objekt 12 wird das Licht 18 in Richtung des Triangulationstasters 10 zurückreflektiert oder zurückremittiert. Durch die Empfangsoptik 24 wird das zurückreflektierte Licht auf die Empfängereinheit 26 gerichtet. Die Sendeeinheit 16 zusammen mit der Sendeoptik 22 bildet dabei den Sender, während die Empfängereinheit 26 zusammen mit der Empfangsoptik 24 den Empfänger bildet. Die Empfangsoptik 24 kann ebenfalls als Sammellinse ausgestaltet sein.

Die Empfängereinheit 26 besteht aus einzelnen Empfangselementen 28, die in Form einer zweidimensionalen Matrix angeordnet sind.

Die gezeigte Geometrie ist eine sogenannte Doppelauge-Geometrie, da Sender und Empfänger jeweils über eine eigene Optik verfügen und nebeneinander in einem System 10 angeordnet sind. Aus dem Abstand zwischen der Sendeeinheit 16 und dem von dem reflektierten Licht auf der Empfängereinheit 26 gebildeten Lichtfleck 30 lässt sich nach dem Triangulationsprinzip der Abstand des Objektes 12 bestimmen. Mehrere Empfangselemente in Y-Richtung ermöglichen die Bestimmung des Schwerpunktes des Lichtfleckes in dieser Richtung. Objekte 12 in unterschiedlichen Abständen 14 erzeugen dabei Lichtflecken 30 mit in Y-Richtung des angedeuteten Koordinatensystems unterschiedlichen Positionen.

Die einzelnen Lichtempfangselemente 28 sind zum Beispiel durch Fotodioden gebildet. Insbesondere kann das gesamte Empfangselement als ein CCD-Chip oder ein CMOS-Chip ausgestaltet sein.

Wie es in Fig. 1 angedeutet ist, trifft der Lichtfleck 30 mehrere Empfangselemente 28 der Empfängereinheit 26.

Die Empfangselemente 28 sind in der Y-Richtung des angedeuteten Koordinatensystems unterschiedlich groß um in an sich bekannter Weise die von der Entfernung des Objektes 12 abhängige Auflösung des Systems auszugleichen.

In X-Richtung des angedeuteten Koordinatensystems sind mehrere Reihen von Empfangselementen 28 nebeneinander angeordnet. Im Beispiel der Fig. 1 sind es drei.

Ebenfalls nur schematisch dargestellt ist eine Auswerteeinheit 32, mit der die Empfangseinheit 26 zur Auswertung verbunden ist. Die Auswerteeinheit kann zum Beispiel zusätzlich ein Display oder ähnliches aufweisen, um die während des Betriebes bestimmten Parameter anzuzeigen, insbesondere die Entfernung 14 des Objektes 12.

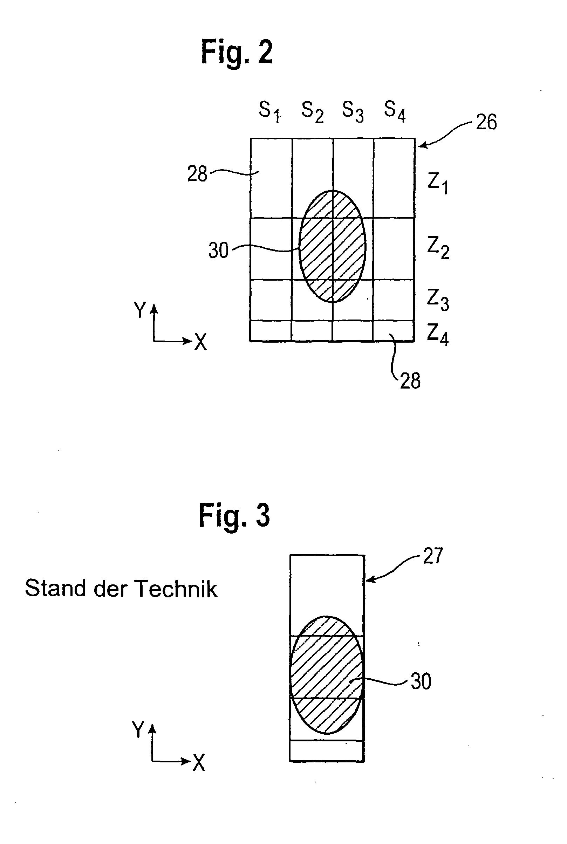

Fig. 2 zeigt die Draufsicht auf ein Beispiel einer Empfängereinheit 26 eines erfindungsgemäßen Triangulationstasters 10, bei dem vier Spalten S₁ bis S₄ an Empfangselementen nebeneinander angeordnet sind. Die Zeilen an Empfangselementen 28 sind mit Z₁ bis Z₄ bezeichnet. Wie bereits mit Bezug zu Fig. 1 erläutert, sind die einzelnen Empfangselemente 28 in unterschiedlichen Zeilen unterschiedlich groß.

Die Anzahl der in Fig. 2 und anderen Figuren dargestellten Empfangselemente 28 ist hier nur schematisch zu verstehen und in tatsächlichen Anwendungen sehr viel höher.

Wie es in Fig. 2 dargestellt ist, überdeckt der Lichtfleck 30 mehrere Empfangselemente 28. Die angedeutete ovale Form resultiert aus der Abbildungsgeometrie.

Fig. 3 zeigt nur zum Vergleich die Empfängereinheit 27 eines optischen Sensors des Standes der Technik, der in X-Richtung nur eine einzelne Reihe von Empfangselementen aufweist.

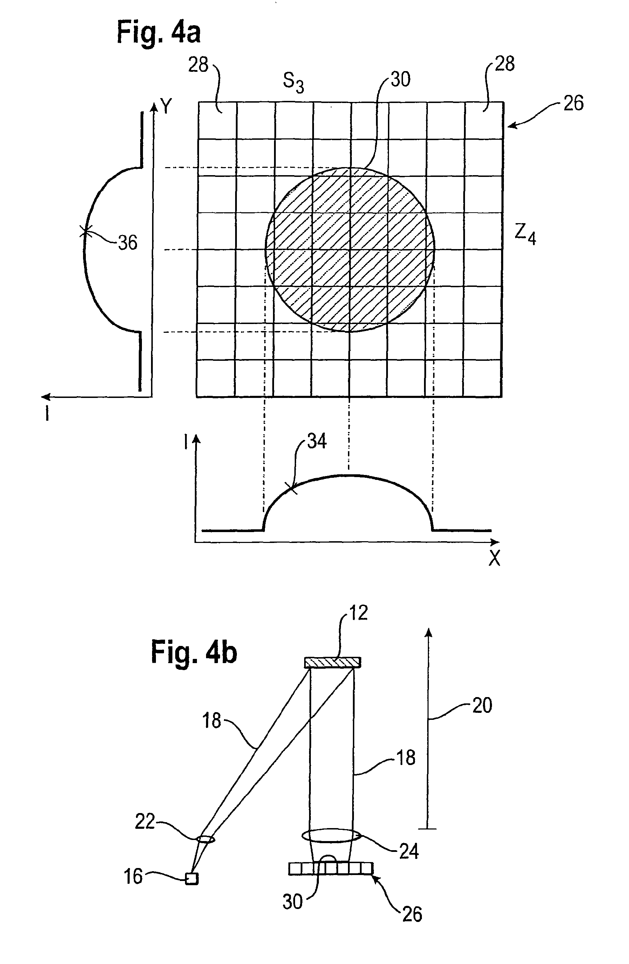

Fig. 4a zeigt eine Empfängereinheit 26 mit Empfangselementen 28. Dargestellt sind hier 64 Empfangselemente 28, in der Regel werden aber zum Beispiel CMOS-Chips mit 64 x 64 Empfangselementen 28 eingesetzt. Gezeigt ist ein Lichtfleck 30, wie er auf der Empfängereinheit 26 entsteht, wenn sich im Erfassungsbereich ein mattes Objekt 12 befindet, das vollständig von dem Sendelichtbündel 18 getroffen wird. Die entsprechende Geometrie ist schematisch in Fig. 4b dargestellt. Seitlich und unterhalb der Darstellung der Empfängereinheit 26 in Fig. 4a sind Diagramme gezeigt, die die räumliche Energieverteilung (bzw. die Intensitätsverteilung) in X- bzw. Y-Richtung des in Fig. 1 angedeuteten Koordinatensystems in willkürlichen Einheiten zeigen. Diese Signalverläufe entstehen durch Summation der einzelnen Spalten- bzw. Zeilenwerte. Beispielsweise entsteht der Messpunkt 34 durch Summation der Ausgangssignale der Empfangselemente 28 in der Spalte S₃ der Empfängereinheit 26, wie es in Fig. 4a gezeigt ist. Der Energiewert 36 in dem links der Fig. 4a angedeuteten Diagramm entsteht zum Beispiel durch Summation der Signalausgänge der Empfangselemente 28 der Zeile Z₄ der Empfängereinheit 26. Dabei ist zu berücksichtigen, dass die tatsächliche Anzahl Empfangselemente 28 des Empfängers 26 höher ist als die dargestellten 64 Elemente, sodass sich der quasi-kontinuierliche Verlauf der seitlich und unterhalb der Fig. 4a gezeigten Diagramme erklärt.

Die Spalten bzw. Zeilen können dabei in einer vorgegebenen Reihenfolge ausgewertet werden oder in einem von dem vorherigen Sensorzustand berücksichtigenden Algorithmus. So kann zum Beispiel ein Algorithmus vorgegeben sein, der die Spalte S₂ dann nur dann auswertet, wenn der Wert aus Spalte S₁ eine bestimmte Schwelle überschritten hat.

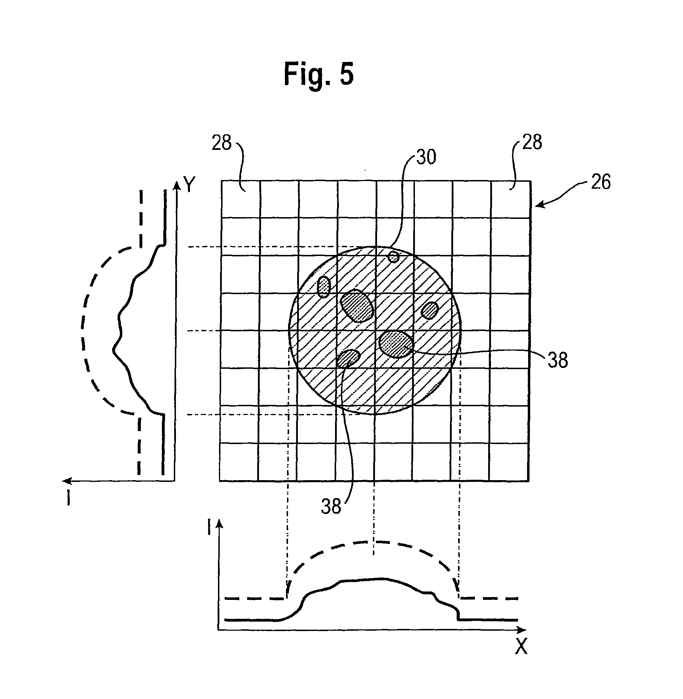

Fig. 5 zeigt eine Empfängereinheit 26 mit Empfangselementen 28 und einen Lichtfleck 30, wie er entsteht, wenn das Objekt 12 eine inhomogene Objektoberfläche aufweist. Dies führt zu Abweichungen des homogenen Verlaufes, die sich zum Beispiel in helleren Flecken 38 wiederspiegeln, die von spiegelnden Objektbereichen des Objektes 12 herrühren können.

In den Energieverteilungen seitlich und unterhalb der Fig. 5 ist gestrichelt die Energieverteilung des Lichtfleckes 30 eines ideal homogenen Objektes 12 dargestellt. Durch die Inhomogenitäten ist die Energieverteilung und die daraus resultierenden Summensignale der einzelnen Spalten und Zeilen niedriger und strukturiert (durchgezogene Kurven).

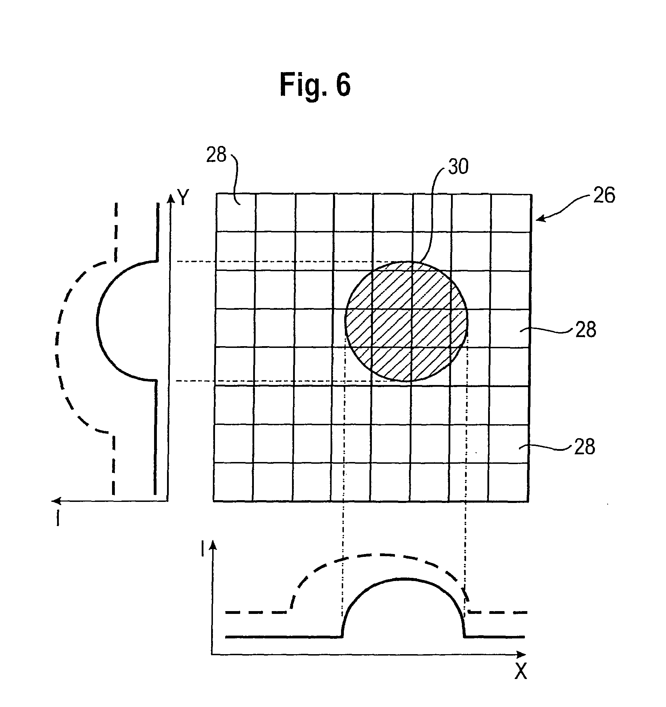

Fig. 6 zeigt die Empfängereinheit 26 mit Empfangselementen 28 und einem Lichtfleck 30, der von einem ideal und vollständig reflektierenden Objekt 12 herrühren würde. Anders als bei dem Beispiel der Fig. 4, bei dem ein Lichtfleck gezeigt ist, der von einem matten Objekt 12 stammt, das insofern ein Lambertscher Reflektor ist, ist der Lichtfleck 30, der von einem spiegelnden Objekt 12 herrührt und in Fig. 6 gezeigt ist, deutlich kleiner. Dies ist darauf zurückzuführen, dass ein spiegelndes Objekt ein virtuelles Bild aus dem doppelten Objektabstand bildet und insofern bei begrenzter Empfangsapertur einen kleineren Lichtfleck. Dies spiegelt sich auch in den Energieverteilungen seitlich und unterhalb der Fig. 6 wieder. Zum Vergleich ist wiederum gestrichelt der Verlauf dargestellt, die er bei einem Lichtfleck 30 aufträte, der ideal matt ausgestaltet ist, entsprechend Fig. 4.

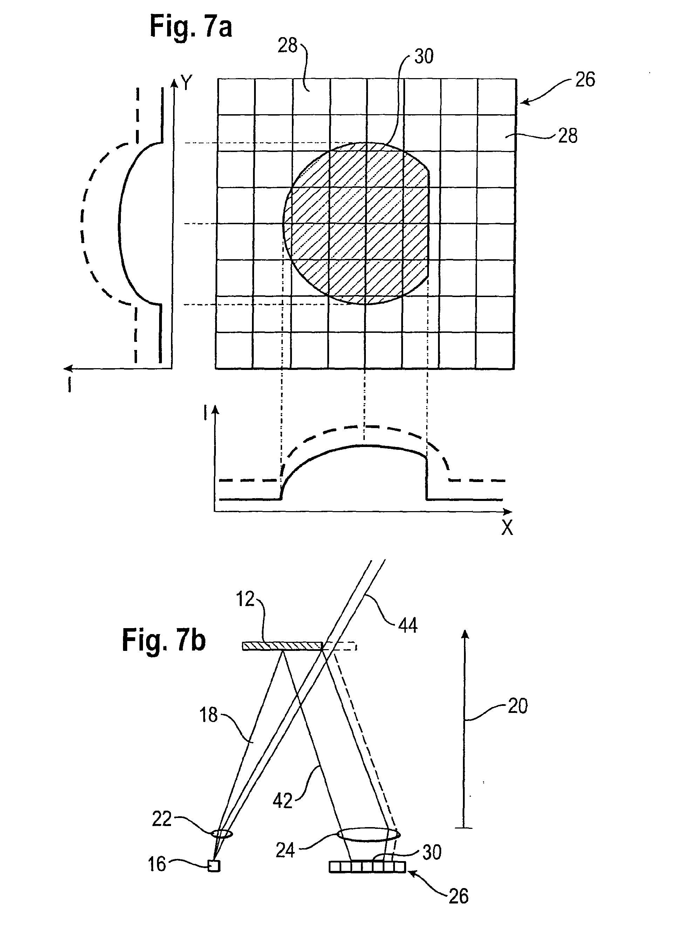

Fig. 7 zeigt die Empfängereinheit 26 mit den Empfangselementen 28 mit einem Lichtfleck 30, wie er entsteht, wenn das Detektionsobjekt 12 nicht vollständig in das Sendelichtbündel 18 eingetreten ist. Die entsprechende Geometrie zeigt Fig. 7b. Ein Teil des Sendelichtbündels 18 passiert das Objekt 12 als nicht-abgelenkter Lichtstrahlteil 44, während ein Teil 42 reflektiert wird. Gestrichelt dargestellt ist der Verlauf, der entstehen würde, wenn das Objekt 12 das Sendelichtbündel 18 vollständig abdecken würde. Seitlich und unterhalb der Fig. 7a ist wiederum die Energieverteilung angedeutet, die durch spalten- bzw. zeilenweise Addition der Signale der Empfangselemente 28 entstehen würde. Gestrichelt ist zum Vergleich die Verteilung angegeben, der sich ergeben würde, wenn das Detektionslichtbündel 18 von dem Objekt 12 vollständig reflektiert werden würde.

In ähnlicher und hier nicht dargestellter Weise lässt sich auch erkennen, ob in dem Objekt eine Kante ist, die unterschiedliche Reflexionsbereiche voneinander trennt.

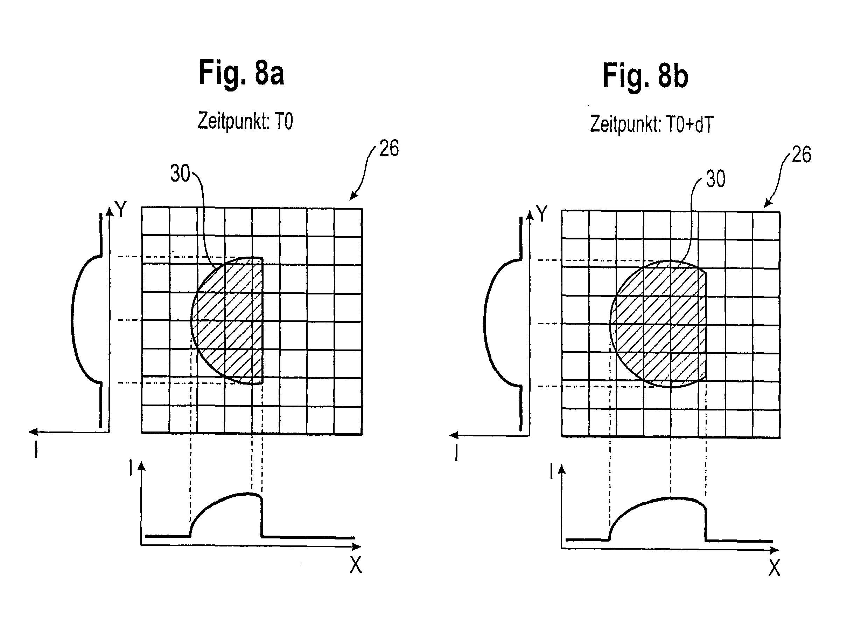

Die Fig. 8a und 8b zeigen ähnliche Bilder zu einem Zeitpunkt TO und einem Zeitpunkt TO + dT. Hier ist ein Objekt gezeigt, das sich in X-Richtung lateral in den Detektionslichtstrahl 18 hineinbewegt. Es ist der Lichtfleck 30 auf dem Empfangselement 26 gezeigt, wie er entsteht, wenn sich ein Objekt 12 in X-Richtung lateral in den Detektionslichtstrahl hineinbewegt. Eine Bewegung des Objektes in Richtung des Triangulationstasters 10 oder von diesem weg würde eine Bewegung des Lichtfleckes 30 in Y-Richtung bewirken, sodass eine solche Bewegung von einer lateralen Bewegung gut zu unterscheiden ist. Auf einfache Weise lässt sich außerdem die Geschwindigkeit bzw. die Bewegungsrichtung feststellen, wenn geprüft wird, welche Spalte bzw. welches Empfangselement 28 zuerst von reflektiertem Licht getroffen wird.

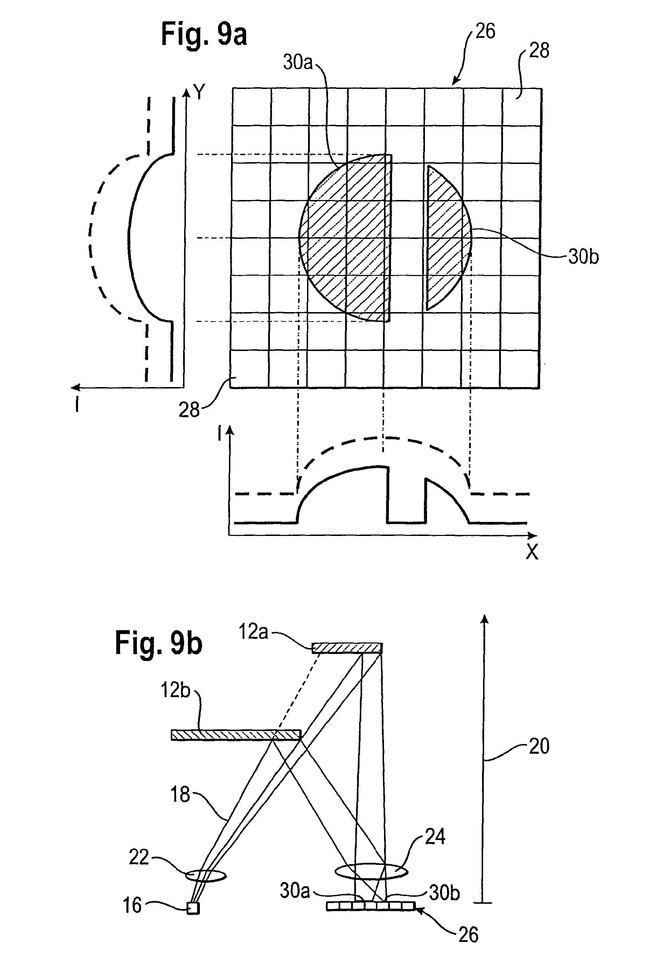

Fig. 9a zeigt die Empfängereinheit 26 mit den Empfangselementen 28, auf dem ein Lichtfleck 30 gezeigt ist, der hier aus zwei Teilen besteht. Dieses Empfangsbild kann entstehen, wenn sich zwei Objekte 12a und 12b im Erfassungsbereich 20 befinden, wie es in Fig. 9b dargestellt ist. Ein Teil des Sendelichtbündels 18 wird am Objekt 12b reflektiert und ergibt den Lichtfleckteil 30b an der Empfängereinheit 26. Ein anderer Teil des Sendelichtbündels 18 wird am Objekt 12a reflektiert und ergibt den Lichtfleckteil 30a. Seitlich und unterhalb der Fig. 9a ist wiederum die Energieverteilung dargestellt, wie sie durch Summation der Signale der einzelnen Empfangselemente 28 der Spalten bzw. Zeilen der Empfängereinheit 26 entsteht.

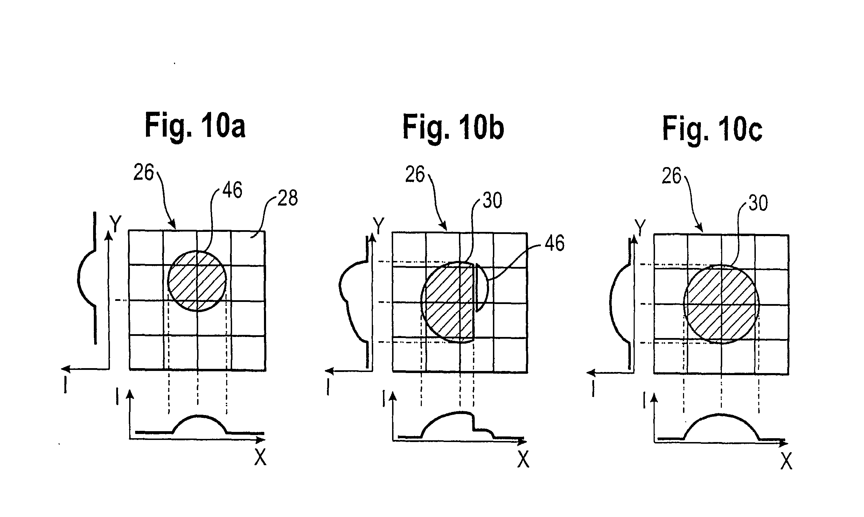

Fig. 10a bis 10c zeigen entsprechende Bilder, die entstehen, wenn sich am detektorfernen Ende des Erfassungsbereichs 20 ein Abschluss befindet. Von diesem Abschluss wird auch ohne ein Objekt im Erfassungsbereich 20 ein Lichtfleck 46 an der Empfängereinheit 26 entstehen, wie es in Fig. 10a schematisch dargestellt ist. Fig.10b zeigt den Zustand, in dem ein Objekt 12 sich seitlich in X-Richtung in den Erfassungsbereich 20 schiebt. Es entsteht ein Bild an der Empfängereinheit 26, das einen Lichtfleck 30 aufweist, wie er zum Beispiel mit Bezug zu Fig. 7 erläutert ist, bei dem bereits ein Teil des Sendelichtbündels 18 von dem Objekt 12 abgedeckt ist. Man sieht daher in Fig. 10b nur noch einen Teil des Lichtflecks 46, der von dem Hintergrund herrührt. In Fig. 10c deckt das Objekt 12 das Sendelichtbündel 18 vollständig ab, sodass von dem Hintergrund kein reflektiertes Licht mehr zur Empfängereinheit gelangt. Seitlich und unterhalb der Fig. 10a bis 10c ist wiederum die entsprechende Energieverteilung angegeben, die durch Summation der Spalten bzw. Zeilensignale der Empfangselemente 28 der Empfängereinheit 26 entsteht. Auch hier ist zu beachten, dass die Figuren nur schematischer Natur sind und eine größere Anzahl Empfangselemente 28 vorhanden ist, sodass der Verlauf dieser Intensitäten quasi-kontinuierlich ist, wie es in den Darstellungen seitlich und unterhalb der Figuren erkennbar ist.

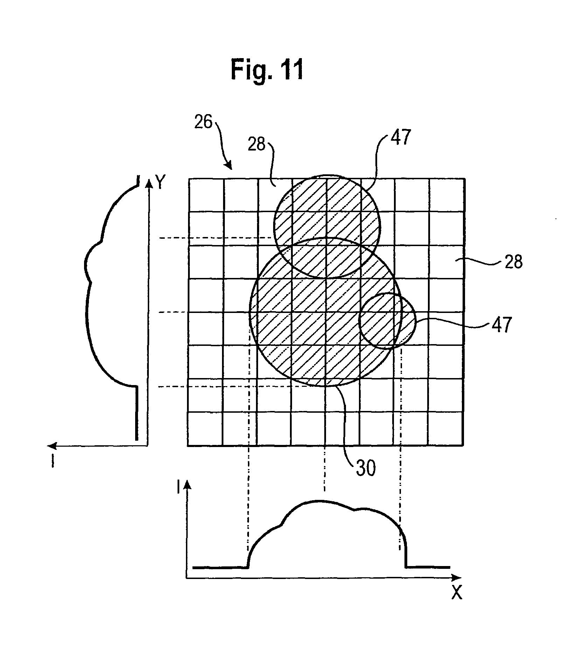

Fig. 11 zeigt eine Empfängereinheit 26 mit Empfangselementen 28 mit einem Lichtfleck 30, wie er zum Beispiel von einem matten Objekt 12 in Richtung der Empfängereinheit 26 reflektiert wird (vgl. Fig. 4). Außerdem treten bei diesem Beispiel zusätzliche Lichtflecken 47 auf, die von aktiven Störelementen im Erfassungsbereich herrühren und zu einer Abweichung des erwarteten Lichtfleckmusters führen.

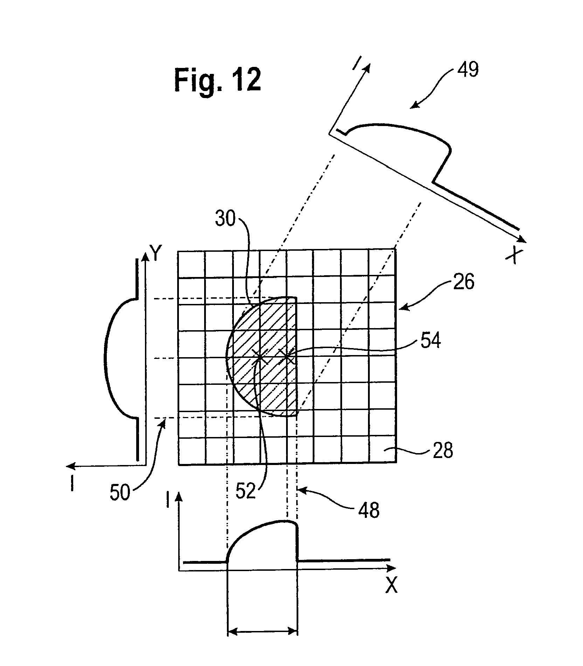

Fig. 12 zeigt verschiedene Beispiele möglicher Bewertungskriterien für einen Lichtfleck 30, wie er beispielsweise von einem teilweise im Sendelichtbündel 18 vorhandenen Objekt 12 hervorgerufen wird (vgl. Fig. 7). Die Diagramme mit den Bezugsziffern 48 und 50 zeigen die lateralen Projektionen, wie sie auch mit Bezug zu den Fig. 4 bis 11 diskutiert wurden. Zusätzlich kann jedoch zum Beispiel auch eine nicht-orthogonale Projektion herausgegriffen werden, wie sie mit Bezugsziffer 49 bezeichnet ist. Aufgrund der zweidimensionalen Anordnung der Empfangselemente 28 in größerer Zahl können hier einzelne Gruppen von Elementen zusammengefasst werden. Außerdem ist es möglich den Schwerpunkt 52 oder den geometrischen Mittelpunkt 54 zu bestimmen und auszuwerten.

Schließlich ist es möglich, dass die zum Beispiel in Fig. 12 dargestellten unterschiedlichen Bewertungskriterien in Abhängigkeit von einem festen Schema oder einem den vorherigen Sensorzustand berücksichtigen Algorithmus angepasst werden.

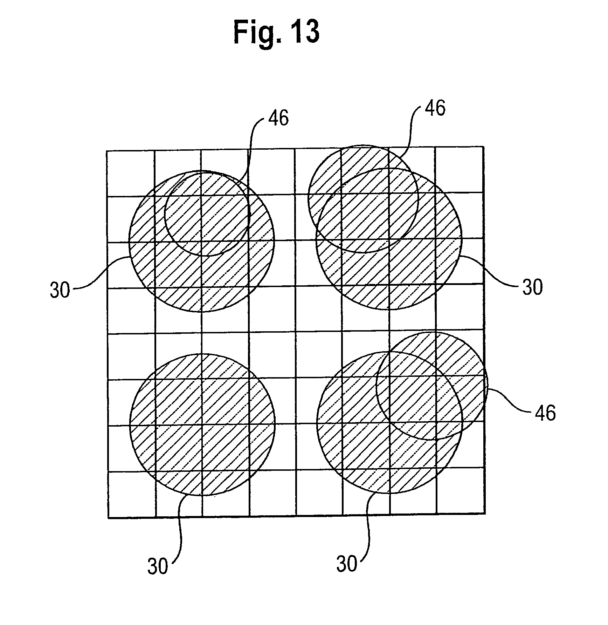

Fig. 13 zeigt nur beispielhaft eine Anwendung, bei der ein strukturiertes Sendelichtbündel verwendet wird, das bei diesem Beispiel aus mehreren Teilen besteht. In einem Zustand, in dem sich kein Objekt 12 im Erfassungsbereich 20 befindet, werden hier vier Lichtflecken 30 erzeugt, die einzeln ausgewertet werden können. Nur beispielhaft sind hier aktive Störelemente berücksichtigt, die zu zusätzlichen Lichtflecken 46 führen, wie es mit Bezug zu Fig. 11 im Falle eines unstrukturierten einfachen Sendelichtbündels beschrieben ist.

Der Triangulationstaster 10 gemäß der Schemazeichnung der Fig. 1 wird verwendet, um in an sich bekannter Weise durch Triangulation die Entfernung 14 des Objektes 12 im Erfassungsbereich 20 des Triangulationstasters 10 zu bestimmen.

Dazu wird die Position des Lichtfleckes 30 auf der Empfängereinheit in seiner Lage in Y-Richtung des angedeuteten Koordinatensystems der Fig. 1 ausgewertet.

Auch aus der Größe des Lichtfleckes lässt sich außerdem über die Abbildungsgesetze der Empfängeroptik der Objektabstand bestimmen um eine redundante Messung des Abstandes 14 des Objektes 12 von dem Triangulationstaster 10 zu erhalten.

Zusätzlich bietet das erfindungsgemäße System noch nützliche Information über die laterale Energieverteilung des Lichtflecks 30 auf der Empfängereinheit 26 insbesondere in X-Richtung, die zum Beispiel wie folgt ausgewertet werden kann:
Ein Lichtfleck 30 gemäß der Fig. 4a erzeugt eine Energieverteilung in X-bzw. Y-Richtung wie sie seitlich und unterhalb in Fig. 4a dargestellt sind.
Ein Nutzer oder eine automatische Auswerteeinheit erkennt an dieser Energieverteilung, dass es sich bei dem Objekt um ein Lambertsches Objekt handelt, das also ideal matt reflektiert. Dies ist zum Beispiel durch Vergleich der Größe und Form des Lichtfleckes an der Empfängereinheit 26 mit Vergleichswerten feststellbar. Zusätzlich zu der Abstandsinformation, die aus der Triangulationsmessung möglich ist, weiß der Nutzer bzw. eine automatische Auswerteeinheit dementsprechend von der matten Oberflächenbeschaffenheit des in den Erfassungsbereich 20 eingebrachten bzw. eingetretenen Objektes 12.

Weist das Objekt zum Beispiel einige spiegelnde Bereiche auf, so entsteht ein Lichtfleck an der Empfängereinheit 26, wie er in Fig. 5 dargestellt ist. Ein solcher Lichtfleck 30 wird zum Beispiel von einem Objekt 12 erzeugt, das in einer teilweise spiegelnden Verpackung eingepackt ist. Durch die zweidimensionale Anordnung von Empfangselementen 28 ist eine entsprechende Information an den Energieverteilungen in Y- bzw. X-Richtung ablesbar, wie in Fig. 5 seitlich und unterhalb dargestellt sind.

Fig. 6 zeigt den Extremfall eines Lichtfleckes 30 von einem vollständig spiegelnden Objekt. Ein spiegelndes Objekt erzeugt ein virtuelles Bild im doppelten Objektabstand. Während bei der normalen Triangulationsmessung ein solches Bild einen verschobenen Schwerpunkt ergeben würde, kann die Zusatzinformation über die Objektbeschaffenheit zum Beispiel durch Vergleich mit einer vorher durchgeführten Einlernmessung dem Benutzer bzw. einer automatischen Auswerteeinheit eindeutig vermitteln, dass es sich um ein spiegelndes Objekt handelt, sodass die vermeintliche Verdoppelung des Abstands berücksichtigt werden kann.

Wie beschrieben zeigt Fig. 7 den Lichtfleck 30 eines nur teilweise in das Sendelichtbündel 18 eingetretenen Objektes 12. Insofern kann der Nutzer aufgrund der zweidimensionalen arrayförmigen Ausgestaltung der Empfängereinheit 26 hier zusätzliche Lageinformation über das Objekt 12 erhalten.

Schließlich kann der zeitliche Verlauf des Lichtfleckes 30 an der Empfängereinheit 26 beobachtet werden, sodass Information über die Bewegungsrichtung, die Bewegungsgeschwindigkeit und andere Bewegungsparameter extrahierbar sind, wie es in Fig. 8 dargestellt ist. Aus einem Lichtfleckmuster, wie es in Fig. 9a in der Energieverteilung in X- bzw. Y-Richtung ablesbar ist, erkennt der Fachmann, dass sich zwei Objekte 12a und 12b im Erfassungsbereich 20 befinden, die unterschiedlichen Abstand von dem Triangulationssensor 10 haben.

Wie beschrieben, kann aus einer zeitlichen Abfolge gemäß den Fig. 10a bis 10c die Bewegungsrichtung, die Bewegungsgeschwindigkeit etc. eines Objektes 12 abgelesen werden, das einen Lichtfleck 30 auf der Empfängereinheit 26 erzeugt.

Eine Energieverteilung in X- bzw. Y-Richtung, wie er zum Beispiel in Fig. 11 dargestellt ist, ergibt die Information, dass sich Störelemente im Erfassungsbereich 20 befinden, da sich das Lichtfleckmuster, das sich in den Energieverteilungen widerspiegelt, von einem eingelernten idealen Lichtfleckmuster unterscheidet, wie es in Fig. 4 gezeigt ist.

Die Auswertung der einzelnen Signale ist in Fig. 12 beispielhaft für verschiedene Projektionsrichtungen dargestellt. Bei einem vorgegebenen Detektionsproblem oder im Zuge eines Einlernvorganges werden Gruppen von einzelnen Empfangselementen 28 herausgegriffen und nur ihr Summenwert betrachtet. Abweichung dieses Summenwertes von einem erwarteten Summenwert gibt dem Nutzer Information über ein in dem Erfassungsbereich 20 befindliches Objekt.

Erfindungsgemäß lässt sich auch die Homogenität des Lichtfleckes auswerten, wozu zum Beispiel die Standardabweichung oder ein mittlerer Kontrast über die Fläche der zweidimensionalen Empfängereinheit bestimmt wird. In vielen Fällen reicht es aus, diesen Messwert mit einem vorher eingelernten Messwert zu vergleichen, um eine zuverlässige Objektidentifizierung zu ermöglichen. Außerdem lässt sich aus einem solchen Lichtfleckqualitätswert darauf schließen, ob ein Signal auf einer fehlerhaften Auswertung beruht.

Die ermittelten und ausgewerteten Bewertungskriterien können mit festen oder einstellbaren/eingelernten Schwellen verglichen werden, um Mess- oder Schaltsignale zur Steuerung oder Regelung von Anlagen abzuleiten.

Bei einer anderen Ausgestaltung werden mehrere Teile eines strukturierten Lichtstrahles eingesetzt, das zu einem Muster führt, wie es in Fig. 13 gezeigt ist, wobei hier ein Beispiel angedeutet ist, bei dem aktive Störer zu zusätzlichen Lichtflecken 46 in den einzelnen Bereichen führen.

Die erfindungsgemäße Anordnung lässt sich sehr vielseitig verwenden, erhöht die Robustheit der Detektion und dient der Unabhängigkeit insbesondere von spezifischen Objekteigenschaften, -geometrien oder -einfahrtsrichtungen. Information über die Bewegung des Objekts, die Einfahrtsrichtung, die Einfahrtsgeschwindigkeit, die Anwesenheit von spiegelnden Hintergründen ("passive Störer") oder Lichtquellenhintergrund ("aktive Störer") ist zusätzlich zur Entfernungsbestimmung möglich.

### Bezugszeichen

- 10: Triangulationstaster
- 12: Objekt
- 14: Abstand
- 16: Leuchtdiode
- 18: Sendelichtbündel
- 20: Erfassungsbereich
- 22: Sendeoptik
- 24: Empfangsoptik
- 26: Empfängereinheit
- 27: Empfängereinheit des Standes der Technik
- 28: Empfangselement
- 30: Lichtfleck
- 30a, 30b: Lichtfleckteile
- 32: Auswerteeinheit
- 34, 36: Summenwert
- 38: hellere Bereiche
- 42: reflektierter Sendelichtanteil
- 44: nicht-abgelenkter Sendelichtteil
- 46: Hintergrundlichtfleck
- 47: Störlichtflecken
- 48, 50: laterale Projektion
- 49: nicht-orthogonale Projektion
- 52: Schwerpunkt
- 54: geometrischer Mittelpunkt
- S₁ - S₄: Spalten von Empfangselementen
- Z₁ - Z₄: Zeilen von Empfangselementen

## Patentansprüche

1. Verfahren zur Erfassung von Objekten in einem Erfassungsbereich, bei dem
- wenigstens ein Sendelichtbündel (18) in den Erfassungsbereich (20) gesendet wird,
- gegebenenfalls von einem Objekt (12) zurückreflektiertes oder zurückremittiertes Sendelicht mit einer Empfängereinheit (26), die in Form einer MxN-Matrix angeordnete Empfangselemente (28) aufweist, detektiert wird, wobei M>1 und N>1, und
- aus der Position, vorzugsweise aus der Schwerpunktposition, des von dem reflektierten oder remittierten Licht an der Empfängereinheit (26) erzeugten wenigstens einen Lichtflecks (30) durch Triangulation die Entfernung des Objektes (12) bestimmt wird,
**dadurch gekennzeichnet, dass**
zusätzlich zur Position des reflektierten oder remittierten Lichtes die zweidimensionale Energieverteilung des wenigstens einen empfangenen Lichtflecks (30) innerhalb des auf der Empfängereinheit (26) auftreffenden Lichtes ausgewertet wird, um zusätzlich zu der durch Triangulation ermittelten Entfernung des Objektes (12) weitere Information über das Objekt (12) zu bestimmen, wobei
ein Lichtfleckqualitätswert bestimmt wird, der Information über die Homogenität des an dem Objekt (12) reflektierten bzw. remittierten Lichtes enthält.

2. Verfahren nach Anspruch 1, **dadurch gekennzeichnet, dass** aus der Bewegung des wenigstens einen Lichtflecks (30) an der Empfängereinheit (26) auf den Bewegungszustand des Objektes (12) im Überwachungsbereich (20), insbesondere auf dessen Bewegungsrichtung, geschlossen wird.

3. Verfahren nach einem der Ansprüche 1 oder 2, **dadurch gekennzeichnet, dass** zusätzlich die Kontur des wenigstens einen empfangenen Lichtflecks (30) innerhalb des auf der Empfängereinheit (26) auftreffenden Lichtes ausgewertet wird, um weitere Information über das Objekt (12) zu bestimmen.

4. Verfahren nach Anspruch 3, **dadurch gekennzeichnet, dass** aus der Kontur des wenigstens einen Lichtflecks (30) auf die Lage des Objektes (12) bezüglich des Sendelichtbündels (18) und/oder auf die Anzahl der Objekte (12a, 12b) im Erfassungsbereich (20) geschlossen wird.

5. Verfahren nach einem der Ansprüche 1 bis 4, **dadurch gekennzeichnet, dass** die Lichtfleckgröße an der Empfängereinheit (26) ausgewertet wird, um eine zusätzliche Abschätzung für die Entfernung (14) des Objektes (12) zu erhalten.

6. Verfahren nach einem der Ansprüche 1 bis 5, **dadurch gekennzeichnet, dass** aus der Energieverteilung oder der Kontur des an der Empfängereinheit (26) empfangenen wenigstens einen Lichtflecks (30) auf die Oberflächenbeschaffenheit eines Objektes (12) in dem Erfassungsbereich (20) geschlossen wird.

7. Verfahren nach einem der Ansprüche 1 bis 6, **dadurch gekennzeichnet, dass** als Lichtfleckqualitätswert die Standardabweichung der räumlichen Energieverteilung bestimmt wird.

8. Verfahren nach einem der Ansprüche 1 bis 7, **dadurch gekennzeichnet, dass** zur Auswertung der Energieverteilung des wenigstens einen Lichtflecks (30) an der Empfängereinheit (26) einer Untermenge der Empfangselemente (28) an der Empfängereinheit (26) betrachtet wird.

9. Verfahren nach einem der Ansprüche 1 bis 8, **dadurch gekennzeichnet, dass** die Energieverteilung des wenigstens einen Lichtflecks (30) an der Empfängereinheit (26) durch spalten- oder zeilenweise Summation der Ausgangssignale der Empfangselemente (28) der Empfängereinheit (26) ausgewertet wird.

10. Verfahren nach einem der Ansprüche 1 bis 9, **dadurch gekennzeichnet, dass** ein lateral strukturiertes Sendelichtbündel verwendet wird.

11. Optischer Sensor zur Erfassung eines Objektes in einem Erfassungsbereich, zur Durchführung eines Verfahrens nach Anspruch 1, mit
- wenigstens einem Lichtsender (16, 22) zum Aussenden wenigstens eines Sendelichtbündels (18),
- wenigstens einer Empfängereinheit (26), die derart angeordnet ist, dass die von einem im Erfassungsbereich (20) angeordneten Objekt (12) zurückreflektierten oder -remittierten Sendelichtbündel (18) auf die Empfängereinheit (26) treffen, und
- einer Auswerteeinheit (32), die nach dem Triangulationsprinzip aus der Position, vorzugsweise aus der Schwerpunktsposition, des auf der Empfängereinheit (26) auftreffenden, von einem Objekt (12) im Erfassungsbereich (20) zurückreflektierten oder zurückremittierten Sendelichtes (18) auf die Distanz des Objektes (12) bestimmt,
wobei
- die Empfängereinheit (26) mehrere in Form einer MxN-Matrix angeordnete Empfangselemente (28) aufweist, wobei M>1 und N>1, und
- der wenigstens eine Lichtsender (16, 22) derart ausgestaltet ist, dass er wenigstens ein lateral ausgedehntes Lichtbündel (18) erzeugt, der nach Reflexion oder Remission von einem Objekt (12) im Erfassungsbereich (20) wenigstens einen Lichtfleck (30) bildet, der in beiden lateralen Dimensionen (X, Y) mehrere Empfangselemente (28) trifft,
**dadurch gekennzeichnet, dass**
die Auswerteeinheit (32) derart ausgestaltet ist, dass sie zusätzlich zur Position des wenigstens einen reflektierten oder remittierten Lichtflecks (30) die zweidimensionale Energieverteilung des wenigstens einen Lichtflecks (30) auswerten kann, um zusätzlich zu der durch Triangulation ermittelten Entfernung (14) des Objektes (12) weitere Information über das Objekt (12) zu bestimmen, wozu sie derart ausgestaltet ist, einen Lichtfleckqualitätswert zu bestimmen, der Information über die Homogenität des an dem Objekt (12) reflektierten bzw. remittierten Lichtes enthält.

12. Optischer Sensor nach Anspruch 11, **dadurch gekennzeichnet, dass** der wenigstens eine Lichtsender (16, 22) eine Leuchtdiode umfasst.

13. Optischer Sensor nach einem der Ansprüche 11 oder 12, **dadurch gekennzeichnet, dass** die Auswerteeinheit (32) derart ausgestaltet ist, als Lichtfleckqualitätswert die Standardabweichung der zweidimensionalen Energieverteilung des wenigstens einen empfangenen Lichtflecks (30) zu bestimmten.

14. Optischer Sensor nach einem der Ansprüche 11 bis 13, **dadurch gekennzeichnet, dass** die Auswerteeinheit (32) derart ausgestaltet ist, zusätzlich die Kontur des wenigstens einen empfangenen Lichtflecks (30) auswerten zu können.
